(19) Europäisches Patentamt
European Patent Office
Office européen des brevets

(11) **EP 1 373 041 B1**

(12) **EUROPÄISCHE PATENTSCHRIFT**

(45) Veröffentlichungstag und Bekanntmachung des Hinweises auf die Patenterteilung:
**20.05.2009 Patentblatt 2009/21**

(21) Anmeldenummer: **02759783.0**

(22) Anmeldetag: **28.03.2002**

(51) Int Cl.:
*B60T 13/66* (2006.01)     *B60T 17/22* (2006.01)
*B60T 8/00* (2006.01)      *F16D 66/00* (2006.01)
*B60T 8/92* (2006.01)

(86) Internationale Anmeldenummer:
**PCT/EP2002/003530**

(87) Internationale Veröffentlichungsnummer:
**WO 2002/081279 (17.10.2002 Gazette 2002/42)**

(54) **VERFAHREN ZUR VERBESSERUNG DES REGELVERHALTENS UND DER THERMISCHEN BELASTBARKEIT EINES KRAFTFAHRZEUGREGELUNGSSYSTEMS**

METHOD FOR IMPROVING CONTROL BEHAVIOR AND STABILITY UNDER A THERMAL LOAD OF AN AUTOMOTIVE CONTROL SYSTEM

PROCEDE POUR L'AMELIORATION DE L'ACTION DE REGLAGE ET DE LA RESISTANCE THERMIQUE D'UN SYSTEME DE REGULATION POUR VEHICULE AUTOMOBILE

(84) Benannte Vertragsstaaten:
**DE FR IT**

(30) Priorität: **28.03.2001 DE 10115550**

(43) Veröffentlichungstag der Anmeldung:
**02.01.2004 Patentblatt 2004/01**

(73) Patentinhaber: **Continental Teves AG & Co. oHG**
**60488 Frankfurt (DE)**

(72) Erfinder:
• **WANKE, Peter**
**60437 Frankfurt (DE)**
• **SCHÜTZ, Christof**
**65439 Flörsheim (DE)**
• **HERRMANN, Torsten**
**60487 Frankfurt am Main (DE)**
• **KOST, Artur**
**65812 Bad Soden (DE)**
• **KLUSEMANN, Rainer**
**60529 Frankfurt am Main (DE)**

(74) Vertreter: **Graf, Ulrich**
**Continental Teves AG & Co.oHG**
**Guerickestrasse 7**
**60488 Frankfurt am Main (DE)**

(56) Entgegenhaltungen:
WO-A-92/00212       DE-A- 4 418 768
DE-A- 19 654 586     US-A- 5 613 744

**Beschreibung**

Die Erfindung bezieht sich auf ein Verfahren zur Verbesserung des Regelverhaltens und der thermischen Belastbarkeit eines Kraftfahrzeugregelungssystems mit Bremseneingriff, wie eines ASR, BTCS oder BASR, ESP etc..

Die wesentlichen Stellmöglichkeiten der heutigen ESP Systeme sind der Bremsen- und der Motoreingriff. Viele der derzeitigen Serienfahrzeuge besitzen jedoch noch keine oder nur eine ungenügende Motormomentenschnittstelle (Möglichkeit der Einflussnahme auf das Motormoment und Rückmeldung des Istwertes), so dass der Motoreingriff überhaupt nicht oder nur mit begrenzter Wirksamkeit durchgeführt werden kann. Um auch für diese Fahrzeuge ein stabilitäts- und traktionserhöhendes Regelsystem anbieten zu können, wird vorgeschlagen, aus dem bestehenden ESP/ASR ein Regelsystem ohne Motoreingriff abzuleiten. Hierdurch ergibt sich naturgemäß ein funktionaler Verlust in Richtung Lenkfähigkeit, Stabilität und Traktion, wobei diese Eigenschaften jedoch gegenüber dem reinen ABS System erheblich verbessert werden.

Das wesentliche Problem eines Regelsystems ohne Antriebs-/Motormomentenregelung besteht in der weit höheren thermischen Belastung der Reibpartner der Bremse, die im Extremfall zum Verlust der Bremswirkung am betroffenen Rad und/oder einem erheblich erstärktem Verschleiß führen kann. Die erhöhte thermische Belastung für die Radbremsen der angetriebenen Achse entsteht, weil nur der Bremseneingriff die Folgen eines zu hoch gewählten Motormoments eingrenzen kann. Probleme entstehen daher in allen Situationen, in denen ein zu groß vorgegebenes Motormoment die Ursache für den Verlust der Stabilität, Lenkfähigkeit oder Traktion des Fahrzeugs darstellt. So kann der Bremseneingriff z.B. zu großen Schlupf im Anfahrbereich zur Traktionssteigerung verkleinern, den Verlust der Seitenführungskräfte durch zu großen Schlupf und infolgedessen auftretender Instabilität verhindern oder eine untersteuernde Instabilität infolge nicht angepasster Geschwindigkeit lindern. Jedoch kann in keinem der genannten Fälle das Motormoment reduziert und damit die Ursache für die Energieeinleitung in das System beseitigt werden. Die Folge ist, dass der Bremseneingriff zeitlich deutlich länger und auf höherem Bremsdruckniveau bei damit erhöhter thermischer Belastung der Reibpartner aktiv sein muss.

Eine Möglichkeit die Gefahr einer thermischen Überbelastung zu verhindern, besteht darin, ein Modell für die Temperaturbelastung der Bremsen zu erstellen und bei Erreichen einer Grenztemperatur das Regelsystem stillzulegen. Diese Vorgehensweise ist technischer Standard in der Bremsenregelung des ASR (ASR=Antriebsschlupfregelung). Würde man diese unverändert auf das Regelsystem ohne Motoreingriffe übertragen, so wäre die Verfügbarkeit des gesamten Regelsystems aufgrund der vorgenannten erhöhten thermischen Belastung der Bremsen stark eingeschränkt. Eine Erhöhung der Grenztemperatur würde jedoch die Gefahr der thermischen Überbelastung der Bremsen mit sich bringen, wodurch der Zielkonflikt bei der Systemauslegung deutlich wird.

Der Erfindung liegt daher die Aufgabe zugrunde, die geschilderten Schwierigkeiten zu überwinden.

Es hat sich herausgestellt, dass diese Aufgabe durch das im Anspruch 1 genannte Verfahren gelöst werden kann.

Vorteilhafte Ausführungsbeispiele der Erfindung sind in den Unteransprüchen beschrieben.

Vorteilhaft sieht das Verfahren zur Verbesserung des Regelverhaltens und der thermischen Belastbarkeit eines Kraftfahrzeugregelungssystems mit Bremseneingriff, wie eines ASR Atriebsschlupfregelung), BTCS oder BASR ( Bremseneingriffs-Antriebs-Schlupf-Regelung), ESP (Elektronisches Stabilitätsprogramm) etc., das keine Motorschnittstelle besitzt, vor, dass zur Verringerung der thermischen Belastung des Bremsensystems in bestimmten Regelungssituationen Teilbereiche der Regelungsfunktionen, die kritische thermische Belastungen des Bremsensystems erwarten lassen, zumindest zeitweise unterbunden oder nur begrenzt zugelassen werden. Dabei hat sich bei einem ESP Kraftfahrzeugregelungssystem ein Verfahren als besonders geeignet dargestellt, das die Teilfunktionen einer Antriebsschlupfregelung danach zeitweise unterbindet oder begrenzt zulässt, ob sich an die Antriebsschlupfregelung eine ESP Regelung anschliesst oder nicht.

Es ist zur Verringerung der thermischen Belastung der Bremsanlage zweckmässig, dass bei einer Antriebsschlupfregelung durch Bremseneingriff (BASR, BTCS) in bestimmten Situationen, wie im Anfahrbereich auf homogenem Reibwert, bei stabiler Kurvenfahrt etc., zumindest zeitweise nur EDS-Funktionen, also Vortriebsverbesserung durch Bremseneingriff an einem Rad einer Achse, zugelassen werden. Einer EDS-Funktion liegt in der Regel eine unterschiedlich griffige Fahrbahn, d.h. unterschiedliches Kraftschlusspotential am rechten oder linken Antriebsrad - (sog. $\mu$-split), zugrunde. Dabei kann die auf der griffigen Fahrbahnseite mögliche Vortriebskraft nicht ausgeschöpft werden. Ursache hierführ ist das Differential zwischen den beiden angetriebenen Rädern, bei dem wegen der Funktion als Momentenwaage die Seite mit dem geringeren Antriebsmoment das Moment auf der gegenüberliegenden Seite bestimmt (bzw. begrenzt). EDS (Elektronische Differentialsperre) greift bei einem durchdrehenden Antriebsrad adaptiv in die Bremse ein, wirkt dadurch ähnlich wie eine Differentialsperre und erhöht die Traktion. Das dabei aufgebrachte Bremsmoment wirkt als zusätzliche Abstützung auf das Differential und steht somit am gegenüberliegenden Rad als Antriebsmoment zur Verfügung. Diese Steigerung der Traktion wirkt vor allem im unteren Geschwindigkeitsbereich des Fahrzeugs, so dass sich eine thermische Belastung der Bremsanlage in zulässigen Bereichen einstellt. Dabei wird die EDS-Funktion bevorzugt dann zeitweise zugelassen, wenn sich an die Antriebsschlupfregelung keine ESP Fahrstabilitätsregelung anschliesst.

Vorteilhaft ist, dass bei einem Eintritt in eine Antriebsschlupfregelung ermittelt wird, ob anhand des Lenkwinkels und/oder der Gierrate und/oder der Querbeschleunigung oder ob anhand der Regeldifferenz der ESP Gierraten- und/oder Schwimmwinkelgeschwindigkeitdifferenzregelung eine Tendenz zu einer nachfolgenden instabilen Kurvenfahrt vorliegt, und dass in diesem Fall bei der Antriebschlupfregelung ein Bremseneingriff an beiden Rädern (BASR, BTCS) zugelassen wird. Weiterhin ist es vorteilhaft, dass bei einer instabilen Kurvenfahrt (ESP Regelung) bei der Antriebschlupfregelung ein Bremseneingriff an beiden Rädern (BASR, BTCS) zugelassen wird. Durch diese Maßnahmen wird einerseits ein Bremsen Voreingriff bereits bei einem für die ESP Regelung "stabilen Fahrverhalten" erzielt; andererseits wird bei einer instabilen Kurvenfahrt über die zugelassene Ansteuerung der beiden Radbremsen die Fahrzeuggeschwindigkeit reduziert und /oder die Stabilität des Fahrzeugs erhöht.

Vorteilhaft ist, dass in für die Fahrstabilität kritischen Situationen die vollständigen Regelungsfunktionen nur zugelassen werden, solange eine Grenztemperatur des Systems, die durch Messung oder Temperaturmodellberechnung ermittelt wird, nicht erreicht wird.

Die Erfindung stellt also eine Lösung des vorgenannten Konflikts dar. Diese besteht im Prinzip darin, bewusst in bestimmten Zustandsbereichen auf Teilbereiche der Regelfunktionen zur Reduktion der thermischen Gesamtbelastung zu verzichten, um die Verfügbarkeit des Gesamtsystems für andere Teilfunktionen zu erhöhen. Als eine Ausbildungsform dieser Grundidee wird vorgeschlagen, auf Traktionsfähigkeit zugunsten einer erhöhten Verfügbarkeit der Stabilisierungseigenschaften des gesamten Regelsystems zu verzichten.

Insbesondere im Anfahrbereich auf niedrigem Reibwert (L$\mu$) treten bekanntlich aufgrund der geringen absetzbaren Radmomente große Radschlüpfe auf, die bei homogenen Reibwertverhältnissen auf beiden Fahrzeugseiten auftreten. Das ASR besitzt prinzipiell zwei Regelungsvarianten. Zum einen ist dies das sogenannte EDS (Elektronische Differentialsperre), das entsprechend der Benennung dieses System nur die Fähigkeit besitzt, Differenzschlupf zwischen beiden Fahrzeugseiten zu eliminieren. Dagegen ist das BTCS (Brake Traction Control System) in der Lage neben diesem Differenzschlupf auch auf beiden Fahrzeugseiten auftretenden Radschlupf auszuregeln. Im Anfahrbereich wird bei homogenen Reibverhältnissen damit meist das BTCS aktiv, d.h. in diesem Fall verbessert das Regelsystem in ersten Linie die Traktionseigenschaften des Fahrzeugs. Befindet sich das Fahrzeug auf Kurvenfahrt auf L$\mu$, so kann insbesondere bei reinem Heckantrieb des Fahrzeugs ein Überdrehen beider Hinterräder, den vollständigen Verlust der Seitenführungseigenschaften des Fahrzeugs und damit einen instabil, übersteuernden Zustand bewirken, den in weiterer Folge auch der Übersteuereingriff des ESP bei niedrigen Reibwerten nicht beseitigen kann.

Es wird hier nun vorgeschlagen, zur Begrenzung der thermischen Belastung nur ein EDS System im Anfahrbereich wirksam werden zu lassen. Erst wenn aufgrund einer Erkennung sichergestellt ist, das eine gierdynamische Situation folgen kann, sich bereits ankündigt oder vorliegt, wird auch das vollständige BTCS mit möglicherweise beidseitigem Bremseneingriff zugelassen. Damit würde das BTCS als eine Art Voreingriff für den klassischen ESP Bremseneingriff wirken.

Die genannten Erkennungen können sich in der folgenden Form ausprägen :

a) Gierdynamisch kritische Situation ist möglich :

Hier muss der Lenkwinkel und/oder die Gierrate und/oder Querbeschleunigung bestimmte Schwellwerte überschreiten.

b) Gierdynamisch kritische Situation kündigt sich an :

Die Regeldifferenz der ESP Gierraten- ($\Delta\dot{\psi}$) und/oder Schwimmwinkelgeschwindigkeitsregelung ($\Delta\dot{\beta}$) überschreitet einen gewissen Anteil k , wobei k > 0 und k <= 1, der jeweiligen Eintrittsschwellen der Regelanteile ($\dot{\psi}_{Schwelle}$ bzw. $\dot{\beta}_{Schwelle}$), d.h.

$$\Delta\dot{\psi} \; = \; \dot{\psi}_{IST} - \dot{\psi}_{SOLL} \; > \; k * \dot{\psi}_{Schwelle} \quad bzw. \quad \Delta\dot{\beta} \; = \; \dot{\beta}_{IST} - \dot{\beta}_{SOLL} \; > \; k * \dot{\beta}_{Schwelle}$$

Die Erkennung könnte bei Unterschreiten eines gewissen Anteils der Austrittsschwelle der genannten Regelungsanteile zurückgesetzt werden, wenn auch eine ggf. aktiv gewordene ESP Regelung beendet ist. Die Erkennung dürfte nur aktiv werden, wenn die untere Eintrittsfahrzeuggeschwindigkeit für das ESP überschritten wird und müsste bei Unterschreiten der Austrittsfahrzeuggeschwindigkeit deaktiviert werden.

c) Gierdynamisch kritische Situation liegt vor :

Das Regelsystem ESP ist aktiv.

Eine Erweiterung der geschilderten Vorgehensweise der situationsselektiven Aktivierung des kompletten BTCS könnte darin bestehen, dass zusätzlich das BTCS auch im Anfahrbereich zugelassen wird, wenn eine bestimmte Grenztemperatur $T_{grenz}$ des Temperaturmodells, die unterhalb der genannten Abschalttemperatur $T_{max}$ liegt, nicht überschritten wird. Oberhalb der unteren Grenztemperatur würde die beschriebene situationsabhängige Aktivierung des vollständigen BTCS greifen. Diese Möglichkeit ist in der folgenden Tabelle mit Konfiguration 2 benannt.

Durch diese gestufte Vorgehensweise liesse sich die Verfügbarkeit der Traktionseigenschaften erweitern. Nachteilig wäre hierbei, dass für den Fahrer die Systemverfügbarkeit wenig übersichtlich ist (Erreichen der unteren Temperaturgrenze).

| Temperatur Bremse | Konfiguration | |
|---|---|---|
| | 1 | 2 |
| $T_B < T_{grenz}$ | | BTCS |
| $T_{grenz} < T_B < T_{max}$ | a) volle BTCS Funktion nur zur Stabilsierung  b) EDS in allen verbleibenden Situationen | a) volle BTCS Funktion nur zur Stabilsierung  b) EDS in allen verbleibenden Situationen |
| $T_B > T_{max}$ | Kein EDS/BTCS | Kein EDS/BTCS |

**Patentansprüche**

1. Verfahren zur Verbesserung des Regelverhaltens und der thermischen Belastbarkeit eines Kraftfahrzeugregelungssystems mit Bremseneingriff, wie eines ASR, BTCS oder BASR, ESP etc., **dadurch gekennzeichnet, dass** zur Verringerung der thermischen Belastung des Bremsensystems in bestimmten Regelungssituationen Teilbereiche der Regelungsfunktionen, die kritische thermische Belastungen des Bremsensystems erwarten lassen, zumindest zeitweise unterbunden oder nur begrenzt zugelassen werden.

2. Verfahren nach Anspruch 1, **dadurch gekennzeichnet, dass** bei einer Antriebsschlupfregelung durch Bremseneingriff (BASR, BTCS) in bestimmten Situationen, wie im Anfahrbereich auf homogenem Reibwert, bei stabiler Kurvenfahrt etc., zumindest zeitweise nur EDS-Funktionen, also Vortriebsverbesserung durch Bremseneingriff an einem Rad einer Achse, zugelassen werden.

3. Verfahren nach Anspruch 1 oder 2, **dadurch gekennzeichnet, dass** bei einem Eintritt in eine Antriebsschlupfregelung ermittelt wird, ob anhand des Lenkwinkels und/oder der Gierrate und/oder der Querbeschleunigung eine Tendenz zu einer nachfolgenden instabilen Kurvenfahrt vorliegt, und dass in diesem Fall bei der Antriebschlupfregelung ein Bremseneingriff an beiden Rädern (BASR, BTCS) zugelassen wird.

4. Verfahren nach einem der Ansprüche 1 bis 3, **dadurch gekennzeichnet, dass** bei einem Eintritt in eine Antriebsschlupfregelung ermittelt wird, ob anhand der Regeldifferenz der ESP Gierraten- und/oder Schwimmwinkelgeschwindigkeitdifferenzregelung eine Tendenz zu einer nachfolgenden instabilen Kurvenfahrt vorliegt, und dass in diesem Fall bei der Antriebschlupfregelung ein Bremseneingriff an beiden Rädern (BASR, BTCS) zugelassen wird.

5. Verfahren nach einem der Ansprüche 1 bis 4, **dadurch gekennzeichnet, dass** bei einer instabilen Kurvenfahrt (ESP Regelung) bei der Antriebschlupfregelung ein Bremseneingriff an beiden Rädern (BASR, BTCS) zugelassen wird.

6. Verfahren nach einem der Ansprüche 1 bis 5, **dadurch gekennzeichnet, dass** in für die Fahrstabilität kritischen Situationen die vollständigen Regelungsfunktionen nur zugelassen werden, solange eine Grenztemperatur des Systems, die durch Messung oder Temperaturmodellberechnung ermittelt wird, nicht erreicht wird.

**Claims**

1. Method for improving control behaviour and stability under a thermal load of an automobile control system with braking intervention such as a traction control system, BTCS or ESP etc., **characterized in that**, in order to reduce the thermal loading on the brake system in specific control situations, parts of the control functions which can be expected to give rise to critical thermal loads on the brake system are at least temporarily prevented or permitted only to a limited degree.

**2.** Method according to Claim 1, **characterized in that**, when traction control is carried out by braking intervention (BTCS) in specific situations such as in the starting range on a homogenous coefficient of friction, during stable cornering etc., only EDS functions, that is to say propulsion improvement by braking intervention at one wheel on an axle, are permitted at least temporarily.

**3.** Method according to Claim 1 or 2, **characterized in that**, when traction control starts, it is determined whether a tendency to subsequent unstable cornering occurs by reference to the steering angle and/or the yaw rate and/or the lateral acceleration, and **in that**, in this case, when traction control occurs, a braking intervention is permitted at both wheels (BTCS).

**4.** Method according to one of Claims 1 to 3, **characterized in that**, when traction control starts, it is determined whether a tendency to subsequent unstable cornering occurs by reference to the control difference between the ESP yaw rate control and/or attitude angle speed differential control, and **in that**, in this case, when traction control occurs, a braking intervention is permitted at both wheel (BTCS).

**5.** Method according to one of Claims 1 to 4, **characterized in that**, during unstable cornering (ESP control), a braking intervention is permitted at both wheels (BTCS) when traction control occurs.

**6.** Method according to one of Claims 1 to 5, **characterized in that,** in situations which are critical for the driving stability, the entire control functions are permitted only for as long as a limiting temperature of the system is not reached, said temperature being determined by measurement or by temperature model calculation.

**Revendications**

**1.** Procédé pour l'amélioration de l'action de réglage et de résistance thermique d'un système de régulation pour véhicule automobile pourvu d'une intervention sur les freins, telle que ASR, BTCS ou BASR, ESP etc., **caractérisé en ce que** pour réduire la charge thermique du système de freinage dans des situations de réglage définies, des zones partielles des fonctions de réglage permettant d'escompter des charges thermiques critiques du système de freinage, sont jugulées au moins de façon partielle ou autorisées de façon limitée uniquement.

**2.** Procédé selon la revendication 1, **caractérisé en ce que** pour un réglage de glissement d'entraînement par intervention sur les freins (BASR, BTCS) dans des situations données, comme dans la zone de démarrage jusqu'à atteinte d'un coefficient de frottement homogène, en situation de conduite en virage stable, etc., seules des fonctions EDS sont autorisées, au moins de façon partielle, donc des fonctions d'amélioration de propulsion par intervention sur les freins au niveau d'une roue d'un essieu.

**3.** Procédé selon la revendication 1 ou 2, **caractérisé en ce qu'**en cas d'entrée dans un réglage de glissement d'entraînement, on calcule à l'aide de l'angle de braquage et/ou du rapport d'embardée et/ou de l'accélération transversale si une tendance de conduite en virage instable s'ensuit et **en ce que** dans ce cas une intervention sur les freins est autorisée sur les deux roues (BASR, BTCS) lors du réglage du glissement d'entraînement.

**4.** Procédé selon l'une quelconque des revendications 1 à 3, **caractérisé en ce qu'**en cas d'entrée dans un réglage de glissement d'entraînement, on calcule si à l'aide de la différence de réglage du rapport d'embardée ESP et/ou du réglage de différence de vitesse d'angle de dérive une tendance de conduite en virage instable s'ensuit, et **en ce que** dans ce cas, une intervention sur les freins est autorisée sur les deux roues (BASR, BTCS) lors du réglage du glissement d'entraînement.

**5.** Procédé selon l'une quelconque des revendications 1 à 4, **caractérisé en ce qu'**en cas de conduite en virage instable (réglage ESP) en cas de réglage de glissement d'entraînement, une intervention sur les freins est autorisée sur les deux roues (BASR, BTCS).

**6.** Procédé selon l'une quelconque des revendications 1 à 5, **caractérisé en ce que** dans des situations critiques pour la stabilité de la conduite, les fonctions de réglage entières ne sont autorisées que lorsqu'une température limite du système, déterminée par mesure ou calcul de modélisation de température, n'est pas atteinte.